# EUROPÄISCHE PATENTSCHRIFT

(11) **EP 3 473 563 B1**
(45) Veröffentlichungstag und Bekanntmachung des Hinweises auf die Patenterteilung: **20.01.2021**
(21) Anmeldenummer: 17197707.7
(22) Anmeldetag: 23.10.2017
(51) Int. Cl.: B65G 15/08, B30B 9/30

(54) **KOMPAKTORANORDNUNG UND VERFAHREN**
COMPACTOR ASSEMBLY AND METHOD
DISPOSITIF FORMANT COMPACTEUR ET PROCÉDÉ

(43) Veröffentlichungstag der Anmeldung: 24.04.2019
(73) Patentinhaber: Wincor Nixdorf International GmbH, 33106 Paderborn (DE)
(72) Erfinder: HARTUNG, Domenic, 99094 Molsdorf (DE)

(56) Entgegenhaltungen:
- EP-A1- 3 208 214
- CN-Y- 2 184 675
- DE-A1- 4 426 858
- DE-U1- 8 611 634
- RU-C1- 2 484 878
- US-A- 373 389
- US-A- 3 104 608
- US-A1- 2003 010 598
- US-A1- 2016 332 819

## Beschreibung

Die Erfindung betrifft eine Kompaktoranordnung und ein Verfahren.

Im Allgemeinen werden zum Kompaktieren von Objekten verschiedene Konzepte verwendet, wobei die Objekte zerteilt, gepresst, und/oder auf eine andere Art umgeformt werden, um deren Platzbedarf zu verringern. Aufgrund des eingeführten Pfandsystems für Einweg- und Mehrwegbehälter (z.B. Flaschen, Dosen, Gläser, etc.) werden zunehmend automatisierte Rücknahmesysteme verwendet, um die Rücknahme großer Mengen an Behältern logistisch einfach zu gestalten. Derartige Rücknahmesysteme können die Behälter beispielsweise nach Art und/oder Material sortieren. Ferner können verschiedene Optionen für die Rücknahme von Einzelbehältern oder Gebinden (z.B. einem Kasten, etc.) vorgesehen sein. In der Regel kann es erforderlich oder hilfreich sein, die Behälter zu zerkleinern, um einen effizienten Abtransport dieser zu ermöglichen. Dabei können nicht nur Einweg-Kunststoffbehälter, sondern auch Einweg-Glasbehälter, kompaktiert werden. Mehrwegbehälter und Mehrweggebinde werden in der Regel separat gesammelt und abtransportiert ohne diese zu kompaktieren. In der Lebensmittelindustrie werden die leeren Behälter auch als Leergut bezeichnet und das Rücknahmesystem als Leergutrücknahmeanlage oder Leergutrücknahmeautomat.

Folgende Druckschriften, in denen verschiedene Transportvorrichtungen beschrieben sind, werden gewürdigt: CN 2 184 675 Y; US 3 104 608 A; DE 86 11 634 US; RU 2484 878 C1; EP 3 208 214 A1; US 2003/010598 A1, US 373 389 A; US 2016/332819 A1; und DE4426858 A1. DE4426858 A1 offenbart eine Kompaktoranordnung nach dem Oberbegriff des Anspruchs 1 und einem Verfahren nach dem Oberbegriff des Anspruchs 14.

Gemäß verschiedenen Ausführungsformen wird eine Kompaktoranordnung bereitgestellt, welche einfach und kostengünstig gewartet werden kann, anschaulich da deren Transportvorrichtung wartungsarm ist. Die Transportvorrichtung kann derart bereitgestellt sein oder werden, dass einige Transportelemente (wie Tragrollen) der Transportvorrichtung auf einfache Weise ausgetauscht und/oder gewartet werden können, geringe Herstellungskosten aufweisen und/oder diese mit einer geringen Anzahl speziell konfigurierter Teile auskommt, so dass auf kostengünstige Normteile zurückgegriffen werden kann.

Ferner wird die Transportvorrichtung derart bereitgestellt, dass diese verschleißarm ist und die verschleißenden Teile als zusammenhängende Baugruppe ausgetauscht werden können, so dass der Wartungsvorgang möglichst wenig Zeit beansprucht.

Ferner wird die Transportvorrichtung derart bereitgestellt, dass diese mit weniger und widerstandfähigeren Tragrollen auskommt, was die Kosten verringert. Erfindungsgemäß wird eine Kompaktoranordnung mit einem Kompaktor und einer Transportvorrichtung zum Versorgen des Kompaktors mit Leergut bereitgestellt, wobei die Transportvorrichtung aufweist: zwei Spannrollen; ein (z.B. umlaufendes) Transportband, welches mittels der zwei Spannrollen gespannt ist; mehrere Abstützanordnungen zum Abstützen des Transportbands (z.B. zum Abstützen des Obertrums des Transportbands), von denen jede Abstützanordnung eine Tragrolle und ein Drehlager aufweist, wobei die Tragrolle mittels des Drehlagers um eine Drehachse herum drehbar gelagert ist, und wobei die Tragrolle eine (z.B. konische und/oder stirnseitige) Mantelfläche aufweist, auf welcher das Transportband aufliegt, die schräg zu der Drehachse ist. Dabei schließt die Mantelfläche mit einer Ebene quer zu der Drehachse einen Winkel in einem Bereich von 10° bis 45° ein, und die Drehachsen der mehreren Abstützanordnungen sind im Wesentlichen parallel zueinander, wobei die jeweilige Drehachse im Wesentlichen vertikal ist.

Gemäß verschiedenen Ausführungsformen kann eine Spannvorrichtung verwendet werden, um die zwei Spannrollen zu spannen. Beispielsweise kann mindestens eine der Spannrollen beweglich (z.B. schwenkbar) gelagert sein derart, so dass diese in eine erste Position bewegt (z.B. geschwenkt) werden kann, in welcher das Transportband montiert und/oder demontiert werden kann, und dass diese in eine zweite Position bewegt (z.B. geschwenkt) werden kann, in welcher das Transportband mittels der zwei Spannrollen gespannt ist.

Als konisch kann verstanden werden, dass ein Durchmesser eines Rotationskörpers (z.B. der oder jeder Tragrolle) in eine Richtung parallel zu dessen Drehachse (auch als Rotationsachse bezeichnet) einen Gradienten aufweist, z.B. kann der Durchmesser in Richtung des Obertrums abnehmen. Beispielsweise kann die Mantelfläche spitz zulaufend eingerichtet sein.

Anschaulich kann das zwischen den zwei Spannrollen gespannte Obertrum des Transportbands mittels der mehreren Abstützanordnungen abgestützt sein oder werden. Gemäß verschiedenen Ausführungsformen kann die Mantelfläche mit der Vertikalen einen größeren Winkel einschließen als die Drehachse.

Gemäß verschiedenen Ausführungsformen kann die Tragrolle einen Pilzkopf aufweisen oder daraus gebildet sein (auch als Pilzkopf-Tragrolle bezeichnet).

Gemäß verschiedenen Ausführungsformen kann die Tragrolle eine Aussparung aufweisen, in welcher das Drehlager aufgenommen ist. Damit kann die (De)Montage erleichtert werden. Erfindungsgemäß ist die Drehachse (z.B. jeder Abstützanordnung der mehreren Abstützanordnungen) im Wesentlichen vertikal (auch als lotrecht bezeichnet). Die Drehachsen einander benachbarter Abstützanordnungen der mehreren Abstützanordnungen sind im Wesentlichen parallel zueinander. Im Wesentlichen kann in dem Zusammenhang verstanden werden, dass die Drehachse weniger als ungefähr 10° von der Vertikalen (welche parallel zur Gewichtskraft und senkrecht zur Horizontalen ist) oder einer anderen Drehachse abweichen kann, z.B. weniger als ungefähr 5°.

Gemäß verschiedenen Ausführungsformen kann das Drehlager ein Wälzlager aufweisen, z.B. ein Kugellager (z.B. ein Rillenkugellager, Schrägkugellager oder ein anderes Kugellager), ein Zylinderrollenlager oder ein anderes Wälzlager.

Gemäß verschiedenen Ausführungsformen kann zumindest ein Abschnitt der Tragrolle (z.B. der oder jeder Abstützanordnung) kegelförmig oder kegelstumpfförmig sein oder zumindest einen kegelförmigen oder kegelstumpfförmigen Abschnitt aufweisen. Der Abschnitt kann die Mantelfläche aufweisen und/oder von dieser begrenzt sein.

Gemäß verschiedenen Ausführungsformen kann die Tragrolle ein Spritzgussmaterial aufweisen, z.B. Kunststoff oder ein Metall. Die kann die Herstellungskosten der Tragrolle verringern.

Beispielsweise kann die Tragrolle ein Spritzgussteil aufweisen oder daraus gebildet sein. Optional kann die Tragrolle neben dem Spritzgussmaterial zusätzlich ein Additiv und/oder einen Füllstoff (wie Glaskugeln oder Glasfasern) aufweisen. Damit kann die Tragrolle widerstandsfähiger sein.

Gemäß verschiedenen Ausführungsformen kann die Tragrolle (z.B. das Spritzgussmaterial) Kunststoff aufweisen oder daraus gebildet sein. Der Kunststoff kann ein Polymer sein, z.B. hauptsächlich aus Makromolekülen bestehend. Der Kunststoff kann beispielsweise ein Thermoplast aufweisen oder daraus gebildet sein. Die kann die Herstellungskosten der Tragrolle verringern.

Gemäß verschiedenen Ausführungsformen kann ein zentraler Abschnitt (anschaulich ein mittiger Streifen) des Transportbands (z.B. des Obertrums) zwischen den mehrere Abstützanordnungen hindurch geführt werden, z.B. freihängend. Der zentrale Abschnitt kann beispielsweise horizontal quererstreckt sein. Damit kann ein stabiler Bandlauf erreicht werden.

Gemäß verschiedenen Ausführungsformen können die mehreren Abstützanordnungen eine erste Reihe Abstützanordnungen und eine zweite Reihe Abstützanordnungen aufweisen, wobei die Abstützanordnungen der ersten Reihe in einem Abstand von den Abstützanordnungen der zweiten Reihe angeordnet sind, und wobei der Abstand quer zu einer Transportrichtung des Transportbands ist. Damit kann ein stabiler Bandlauf erreicht werden.

Gemäß verschiedenen Ausführungsformen können die Abstützanordnungen der ersten Reihe einen ersten Randabschnitt des Transportbandes abstützen und die Abstützanordnungen der zweiten Reihe einen zweiten Randabschnitt des Transportbandes abstützen, wobei der erste Randabschnitt und der zweite Randabschnitt einander gegenüberliegen. Damit kann ein stabiler Bandlauf erreicht werden.

Gemäß verschiedenen Ausführungsformen können der erste Randabschnitt und der zweite Randabschnitt schräg zueinander sein. Anschaulich kann das Transportband (z.B. dessen Obertrum) in Muldenform (d.h. mittig tiefer liegend als am Rand) abgestützt sein oder werden. In der Mulde lassen sich die Behälter stabil transportieren.

Gemäß verschiedenen Ausführungsformen kann die Transportvorrichtung einen Transportpfad definieren, welcher neben dem Kompaktor angeordnet ist. Dies erreicht einen variablen Einsatz und erleichtert die Einbindung in eine Transportstrecke.

Gemäß verschiedenen Ausführungsformen kann die Kompaktoranordnung ferner aufweisen: eine Selektiervorrichtung, welche zum selektiven Auswählen von mittels der Transportvorrichtung transportierten Behältern und zum Zuführen der ausgewählten Behälter zu dem Kompaktor eingerichtet ist. Dies erreicht einen variablen Einsatz und erleichtert die Einbindung in eine Transportstrecke.

Gemäß verschiedenen Ausführungsformen kann die Kompaktoranordnung ferner aufweisen: ein Tragegestell, auf welchem die Transportvorrichtung abgestützt ist. Die erleichtert die Montage der Kompaktoranordnung.

Gemäß verschiedenen Ausführungsformen kann die Transportvorrichtung ferner aufweisen: einen Träger zum Tragen der mehreren Abstützanordnungen; und eine Aufsteckstruktur, auf welche der Träger aufgesteckt ist. Die erleichtert die Montage der Kompaktoranordnung.

Erfindungsgemäß wird ein Verfahren zum Versorgen eines Kompaktor einer Kompaktoranordnung mit Leergut bereitgestellt, das Verfahren aufweisend: Antreiben eines Transportbandes einer Transportvorrichtung der Kompaktoranordnung; Abstützen des Transportbandes (z.B. des Obertrums) mittels mehrerer in einer ersten Reihe und in einer zweiten Reihe angeordneter Abstützanordnungen, von denen jede Abstützanordnung eine Tragrolle und ein Drehlager aufweist, wobei die Tragrolle mittels des Drehlagers um eine Drehachse drehbar gelagert ist, wobei die Tragrolle eine (z.B. konische) Mantelfläche aufweist, auf denen das Transportband aufliegt, die schräg zu der Drehachse ist. Dabei schließt die Mantelfläche mit einer Ebene quer zu der Drehachse einen Winkel in einem Bereich von 10° bis 45° ein, und die Drehachsen der mehreren Abstützanordnungen sind im Wesentlichen parallel zueinander, wobei die jeweilige Drehachse im Wesentlichen vertikal ist.

Ausführungsbeispiele sind in den Figuren dargestellt und werden im Folgenden näher erläutert.

Es zeigen
Figur 1A und Figur 1B einen Kompaktor gemäß verschiedenen Ausführungsformen in verschiedenen schematischen Ansichten;
Figur 2A und Figur 2B eine Kompaktoranordnung gemäß verschiedenen Ausführungsformen in verschiedenen schematischen Ansichten;
Figur 3A und Figur 3B jeweils eine Leergutrücknahmeanlage gemäß verschiedenen Ausführungsformen in einer schematischen Perspektivansicht;
Figur 4A eine Transportvorrichtung gemäß verschiedenen Ausführungsformen in einer schematischen Seitenansicht oder Querschnittsansicht;
Figur 4B und Figur 4C eine Abstützanordnung gemäß verschiedenen Ausführungsformen in verschiedenen schematischen Ansichten;
Figur 5A und Figur 5B jeweils eine Abstützanordnung gemäß verschiedenen Ausführungsformen in verschiedenen Ansichten;
Figur 6A einen Sockel gemäß verschiedenen Ausführungsformen in einer schematischen Perspektivansicht ohne Drehlager;
Figur 6B eine Transportvorrichtung gemäß verschiedenen Ausführungsformen in einer schematischen Perspektivansicht;
Figur 7, Figur 8 und Figur 9 jeweils eine Transportvorrichtung gemäß verschiedenen Ausführungsformen in einer schematischen Perspektivansicht;
Figur 10 veranschaulicht eine Kompaktoranordnung gemäß verschiedenen Ausführungsformen in einer schematischen Perspektivansicht;
Figur 11 veranschaulicht ein Verfahren gemäß verschiedenen Ausführungsformen in einem schematischen Ablaufdiagramm;
Figur 12 veranschaulicht eine Kompaktoranordnung gemäß verschiedenen Ausführungsformen in einer schematischen Perspektivansicht; und
Figur 13A, Figur 13B und Figur 13C jeweils eine Tragrolle gemäß verschiedenen Ausführungsformen in verschiedenen Konfigurationen.

In der folgenden ausführlichen Beschreibung wird auf die beigefügten Zeichnungen Bezug genommen, die Teil dieser bilden und in denen zur Veranschaulichung spezifische

Ausführungsformen gezeigt sind. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

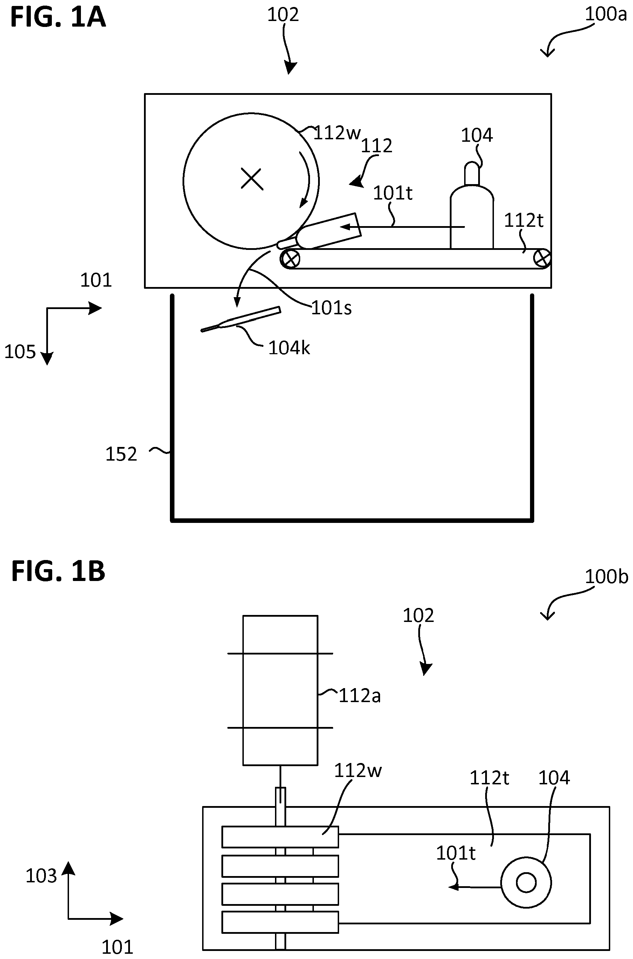

**Fig.1A** und **Fig.1B** veranschaulichen einen Kompaktor 102 gemäß verschiedenen Ausführungsformen in einer schematischen Querschnittsansicht 100a und einer schematischen Draufsicht 100b.

Ein Kompaktor 102 kann als funktionelle Baugruppe einer Leergutrücknahmeanlage verstanden werden. Der Kompaktor 102 kann beispielsweise eingerichtet sein, zumindest einen Teil des der Leergutrücknahmeanlage zugeführten Leerguts 104 (auch als Behälter bezeichnet) zu kompaktieren, d.h. dessen Platzbedarf zu verringern. Dies kann beispielsweise erfolgen, indem das Leergut umgeformt und/oder gepresst (z.B. in eine flache Form gedrückt) wird. Das kompaktierte Leergut 104k kann in einem Frachtbehälter 152 gesammelt werden, welcher beispielsweise unter dem Kompaktor 102 angeordnet sein oder werden kann. Beispielsweise kann das kompaktierte Leergut 104k nach unten aus dem Kompaktor 102 ausgeworfen 101s werden.

Das Leergut 104 (oder mit anderen Worten ein oder mehrere Behälter) kann in dem Zusammenhang als entleerte Verkaufsverpackung und/oder Verkaufsbehälter verstanden werden, wie etwa Einwegflaschen, Einwegpfandflaschen, Getränkedosen, Mehrwegflaschen und Ähnliches. Die Leergutrücknahmeanlage kann beispielsweise Teil einer Leergut-Rückführungskette sein, welche das Leergut beispielsweise einer Wiederverwendung oder einer Verwertung (z.B. zur Rohstoff-Rückgewinnung) zuführt.

Der Kompaktor 102 kann mindestens ein Kompaktierwerk 112 (anschaulich eine Vorrichtung zum Verringern des Platzbedarfs), auch bezeichnet als Schneidwerk 112, aufweisen, mittels dessen das Leergut 104 kompaktiert wird. Das Kompaktierwerk 121 kann zumindest eine Kompaktierwalze 112w (z.B. eine Einzel-Kompaktierwalze, mehrere gegenläufige Kompaktierwalzen, etc.) und einen Antrieb 112a (z.B. einen elektrischen Motor oder ähnliches) aufweisen zum Antreiben der Kompaktierwalze 112w. Optional kann das Kompaktierwerk 112 eine Zuführvorrichtung 112t aufweisen zum Zuführen 101t des Leerguts 104 in Richtung der Kompaktierwalze 112w.

Die Zuführvorrichtung 112t kann einen Bandförderer aufweisen oder ein Bandförderer sein. Der Bandförderer kann beispielsweise ein Transportband (z.B. einen Gurt, ein Kettenband oder Ähnliches; es ist anzumerken, dass auch mehrere Bänder, Gurte oder dergleichen zur Realisierung des Transportbandes vorgesehen sein können, wobei die mehreren Bänder, Gurte oder dergleichen auf gemeinsamen Spannrollen gespannt sein können oder jeweils auf separate Spannrollen, die optional gemeinsam in gleicher Weise angesteuert werden können) aufweisen, auf welchem das Leergut 104 transportiert wird. Das Transportband kann mittels mehrerer Transportrollen (auch als Tragrollen bezeichnet) abgestützt werden. Alternativ oder zusätzlich kann die Zuführvorrichtung 112t einen Rollenförderer aufweisen, welcher eine Vielzahl von Transportrollen aufweist, welche eine Transportfläche bereitstellen, auf welcher das Leergut 104 transportiert wird. Es können alternativ oder zusätzlich noch andere Förderertypen verwendet werden, welche geeignet zum Transport des Leerguts 104 sind. Optional kann die Transportvorrichtung ein Schaufelrad (nicht dargestellt) aufweisen, welches eingerichtet ist, das transportierte Leergut 104 zu der Kompaktierwalze 112w zu führen. Ferner kann optional auch eine Rutsche als Zuführvorrichtung 112t verwendet werden, auf welcher das Leergut 104 in Richtung der Kompaktierwalze 112w rutscht.

Ferner kann das Kompaktierwerk 112 eine Vielzahl anderer Bauteile aufweisen, z.B. Schutzbleche, Blenden, Lager, Führungselemente und Ähnliches, welche zum Betreiben des Kompaktierwerks 112 hilfreich sein können.

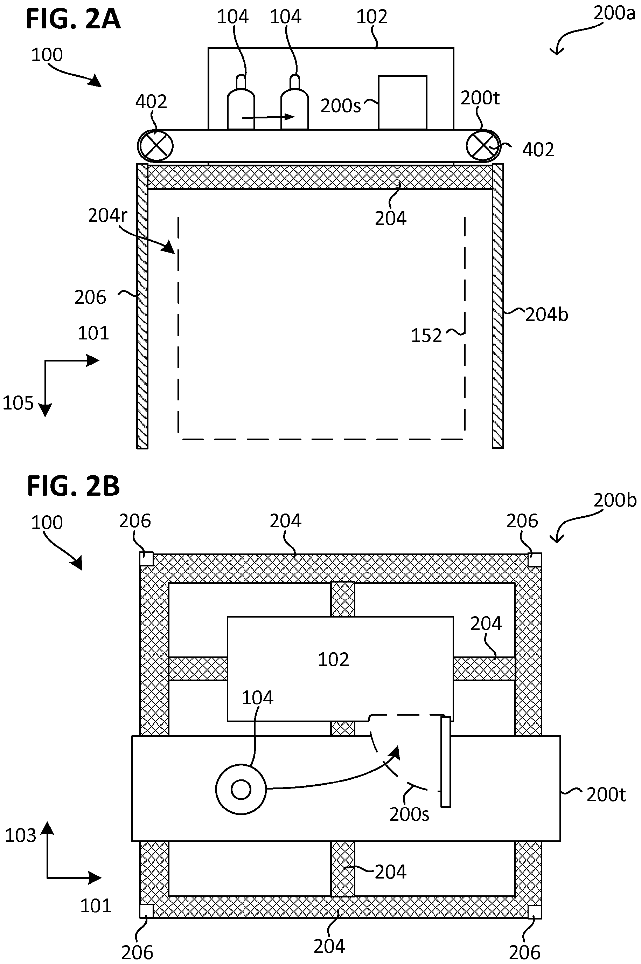

**Fig.2A** und **Fig.2B** veranschaulichen eine Kompaktoranordnung 100 gemäß verschiedenen Ausführungsformen in einer schematischen Seitenansicht 200a oder Querschnittsansicht 200a und einer schematischen Draufsicht 200b.

Der Kompaktor 102 kann Teil der Kompaktoranordnung 100 sein. Die Kompaktoranordnung 100 kann zusätzlich zu dem Kompaktor 102 weitere funktionelle Baugruppen aufweisen, welche beispielsweise den Betrieb des Kompaktors 102 unterstützen und/oder den Kompaktor 102 in eine Ablaufkette einer Leergutrücknahmeanlage einbinden.

Die Kompaktoranordnung 100 kann beispielsweise ein Tragegestell 204 aufweisen, welches ein Tragegestellteil oder mehrere Tragegestellteile aufweisen kann. Mittels des Tragegestells 204 kann der Kompaktor 102 abgestützt sein oder werden. Beispielsweise kann das Tragegestell 204 den Kompaktor 102 in einer Arbeitshöhe (z.B. in einer Höhe in einem Bereich von ungefähr 0,5 bis ungefähr 2 m) abstützen. Somit kann beispielsweise ein Frachtbehälter 152 (z.B. ein Container, ein anderer Großraum-Behälter, etc.) unter dem Kompaktor 102 angeordnet werden. Beispielsweise kann das Tragegestell 204 mehrerer Stützbeine 206 aufweisen, oder mit anderen Worten, kann das Tragegestell 204 mittels mehrerer Stützbeine 206 abgestützt sein. Zwischen den mehreren Stützbeinen 206 kann ein Bereich 204r (auch als Sammelbereich bezeichnet) unter dem Kompaktor 102 der Kompaktoranordnung 100 bereitgestellt sein zum Aufnehmen eines Frachtbehälters 152. Mittels des Frachtbehälters 152, wie er hierin beschrieben ist, kann das kompaktierte Leergut 104k beispielsweise leicht gesammelt und abtransportiert werden, wobei beispielsweise ein voller Frachtbehälter 152 gegen einen leeren Frachtbehälter 152 ausgetauscht werden kann.

Die Kompaktoranordnung 100 kann beispielsweise eine Transportvorrichtung 200t aufweisen, welche eingerichtet ist, dem Kompaktor 102 das Leergut 104 zuzuführen oder das Leergut 104 an diesem vorbei zu führen. Die Transportvorrichtung 200t kann beispielsweise Teil einer Transportstrecke sein, entlang derer das Leergut 104 transportiert wird, z.B. durch eine Kompaktoranordnung 100 oder durch mehrere Kompaktoranordnungen 100 hindurch.

Beispielsweise kann zu kompaktierendes Leergut 104 (z.B. Einweg-Kunststoffbehälter, Einweg-Blechdosen, etc.), welches mittels der Transportvorrichtung 200t transportiert wird, erkannt werden, z.B. mittels einer entsprechend eingerichteten Sensoranordnung, und selektiv dem Kompaktor 102 zugeführt werden, z.B. mittels einer entsprechend eingerichteten Selektiervorrichtung 200s, die beispielsweise basierend auf Sensordaten der Sensoranordnung gesteuert bzw. geregelt wird. Nicht zu kompaktierendes Leergut 104 (z.B. Mehrweg-Behälter, etc.), dass mittels der Transportvorrichtung 200t transportiert wird, kann beispielsweise an dem Kompaktor 102 vorbei und durch die Kompaktoranordnung 100 hindurch transportiert werden.

Die Selektiervorrichtung 200s kann beispielsweise eingerichtet sein, aus einem Leergut-Strom, welcher mittels der Transportvorrichtung 200t geführt wird, das Leergut 104, welches eine der Kompaktoranordnung 100 zugeordnete Kategorie (z.B. "zum Kompaktieren") aufweist, herauszuteilen und dem Kompaktor zuzuführen.

Die Selektiervorrichtung 200s kann optional eingerichtet sein, das Kategorisieren des Leerguts 104 durchzuführen, z.B. nach "zu-kompaktierend" oder "nicht-zu-kompaktierend" und optional nach weiteren Merkmalen wie Behältertyp, Rückführungstyp, Material und/oder Farbe. Als "zu-kompaktierend" kategorisiertes Leergut 104 kann beispielsweise weiter nach seiner Farbe und/oder Material unterkategorisiert werden und ob es überhaupt dem betreffenden Kompaktor 102 zugeführt werden soll. Das Kategorisieren kann alternativ oder zusätzlich mittels einer Kategorisiereinrichtung am Eingang 302 einer Leergutrücknahmeanlage (vergleiche die nachfolgenden Figuren) erfolgen.

Die Kompaktoranordnung 100 kann optional ein Gehäuse 300g (vergleiche die nachfolgenden Figuren) aufweisen, in welchem der Kompaktor 102 und die Transportvorrichtung 200t angeordnet sind. Das Gehäuse 300g kann zumindest eine erste Öffnung aufweisen, durch welche hindurch der Kompaktoranordnung 100 Leergut 104 zugeführt (z.B. mittels der Transportvorrichtung 200t aufgenommen) wird, z.B. entlang der Transportstrecke. Optional kann das Gehäuse 300g eine zweite Öffnung aufweisen, durch welche hindurch die Kompaktoranordnung 100 das an dem Kompaktor 102 vorbei transportierte Leergut 104 (z.B. mittels der Transportvorrichtung 200t) ausgibt, z.B. entlang der Transportstrecke.

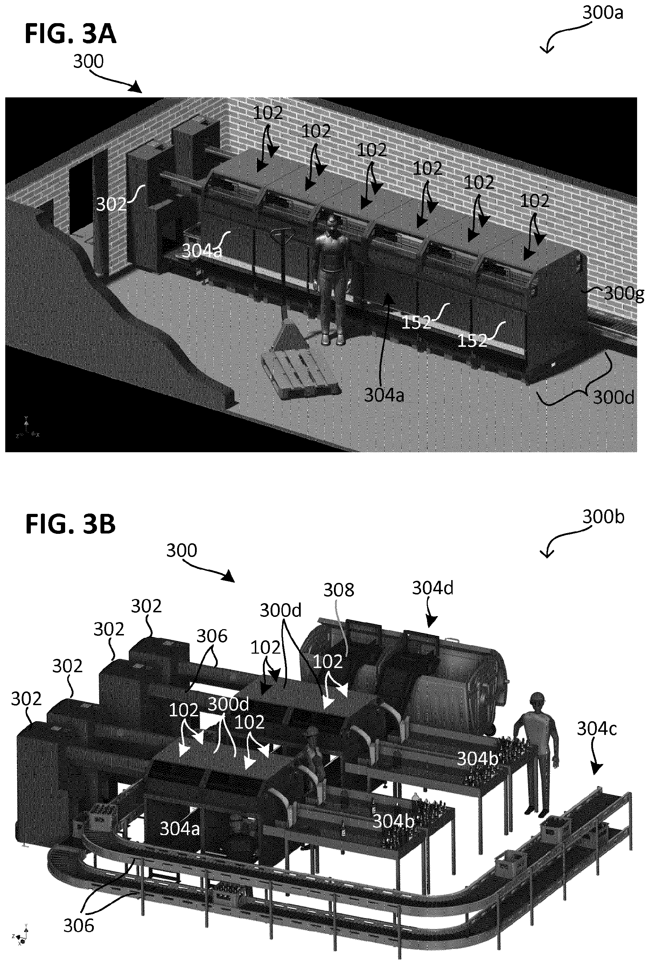

**Fig.3A** und **Fig.3B** veranschaulichen jeweils eine Leergutrücknahmeanlage 300 gemäß verschiedenen Ausführungsformen in einer schematischen Perspektivansicht in verschiedenen Konfigurationen 300a, 300b.

Gemäß verschiedenen Ausführungsformen kann die Leergutrücknahmeanlage 300 mehrere der Kompaktoranordnungen 100 (zusammen auch als Kompaktoreinrichtung bezeichnet) aufweisen, wie sie hierin beschrieben sind. Diese können entlang einer Reihe angeordnet sein oder entlang mehrerer Reihen und somit eine Transportstrecke 306 oder mehrere Transportstrecken 306 bedienen und/oder bilden.

Die Ablaufkette beim Betrieb der Leergutrücknahmeanlage 300 kann an ihrem Anfang 302 beispielsweise eine Überprüfung des Leerguts 104 (z.B. auf dessen Rücknahmefähigkeit) aufweisen. Beispielsweise können zur Überprüfung verschiedene Merkmale des Leerguts 104 (wie beispielsweise Leerguttyp, Gewicht, Gebindetyp, Barcode-Informationen, usw.) erfasst werden. Das als rücknahmefähig kategorisierte Leergut 104 kann dann von der Leergutrücknahmeanlage 300 angenommen werden.

Die mehreren Kompaktoranordnungen 100 können in die Ablaufkette eingebunden sein. Die mehreren Kompaktoranordnungen 100 können beispielsweise gemäß der Unterkategorisierung kompaktieren. Von den mehreren Kompaktoranordnungen kann beispielsweise eine erste Kompaktoranordnung Leergut einer ersten Unterkategorie (z.B. "blau" oder "Kunststoff") kompaktieren und eine zweite Kompaktoranordnung kann Leergut einer zweiten Unterkategorie (z.B. "rot" oder "Blech") kompaktieren. Alternativ dazu können die Kompaktoranordnungen 100 nacheinander aufgefüllt werden, ohne das Leergut zu unterscheiden. Beispielsweise kann dann eine erste Kompaktoranordnung der mehreren Kompaktoranordnungen 100 gewartet werden während eine zweite Kompaktoranordnung der mehreren Kompaktoranordnungen 100 den Betrieb der jeweiligen Transportstrecke 306 aufrechterhält.

Zum Bereitstellen zweier paralleler Transportstrecken 306 kann eine Kompaktoranordnung 100 zwei Kompaktoren 102 aufweisen, welche nebeneinander (z.B. "Rücken an Rücken") auf einem gemeinsamen Tragegestell 204 der Kompaktoranordnung 100 angeordnet sind (auch als Doppelmodul 300d bezeichnet). Die Kompaktoren 102 eines Doppelmoduls 300d können parallel zueinander eingebunden sein (d.h. zwei unterschiedliche Transportstrecken bedienen). Optional können mehrere Doppelmodule 300d entlang einer Transportstrecke 306 hintereinander (d.h. in Serie) eingebunden sein. Somit kann beispielsweise ein Kompaktor 102 eines ersten Doppelmoduls 300d gewartet werden während der dazu serielle Kompaktor 102 eines zweiten Doppelmoduls 300d den Betrieb aufrechterhält. Mehrere Doppelmodule 300d können alternativ oder zusätzlich parallel zueinander (d.h. in verschiedenen Transportstrecken-Paaren) eingebunden sein.

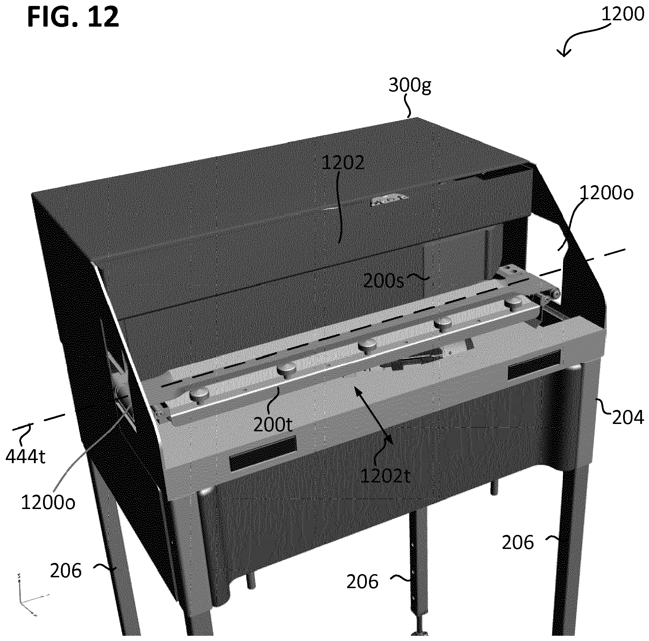

Alternativ dazu können die Kompaktoranordnungen 100 jeweils nur einen Kompaktor 102 aufweisen (vergleiche Fig. 12) und/oder separat aufgestellt sein oder werden.

Die Ablaufkette kann an einem ersten Ende einen ersten Sammelraum 304a (z.B. mit dem Frachtbehälter 152 darin) zum Aufnehmen des kompaktierten Leerguts 104k aufweisen, wie vorangehend beschrieben ist. Die Ablaufkette kann optional an einem zweiten Ende zumindest einen zweiten Sammelraum 304b für nicht-zu-kompaktierendes Einzel-Leergut (z.B. Mehrweg-Leergut oder Glasflaschen), an einem dritten Ende einen dritten Sammelraum 304c für Leergut-Kisten und/oder an einem vierten Ende einen vierten Sammelraum 304d für nicht verwertbares Leergut (z.B. zu entsorgendes Leergut) aufweisen. Die Enden der Ablaufkette können mittels eines Transportsystems verbunden sein, so dass zu jedem Ende eine Transportstrecke 306 führt. Das Transportsystem kann beispielsweise mehrere Transportstrecken 306 aufweisen und optional an Stellen, an denen sich das Transportsystem verzweigt (d.h. zwei Transportstrecken 306 aneinandergrenzen), eine Selektiervorrichtung aufweisen.

Wie in Fig.3B dargestellt ist, kann das Leergut 104 aus dem Kompaktor 102 der jeweiligen Kompaktoranordnung 100 auch auf ein (in den ersten Sammelraum 304a erstrecktes) Abtransportband 308 fallen, mittels dessen das kompaktierte Leergut 104k in den vierten Sammelraum 304d (z.B. neben den Kompaktoranordnungen 100 angeordnet), z.B. in darin separat aufgestellte Container, abtransportiert werden kann. Somit kann beispielsweise die Leergutrücknahmeanlage 300 platzsparend bereitgestellt sein, da keine Container von unterhalb des Kompaktors 102 der jeweiligen Kompaktoranordnung 100 ausgetauscht werden müssen und/oder kompaktiertes Leergut 104k aus mehreren Kompaktoranordnungen 100 kategorieweise zusammengeführt werden kann.

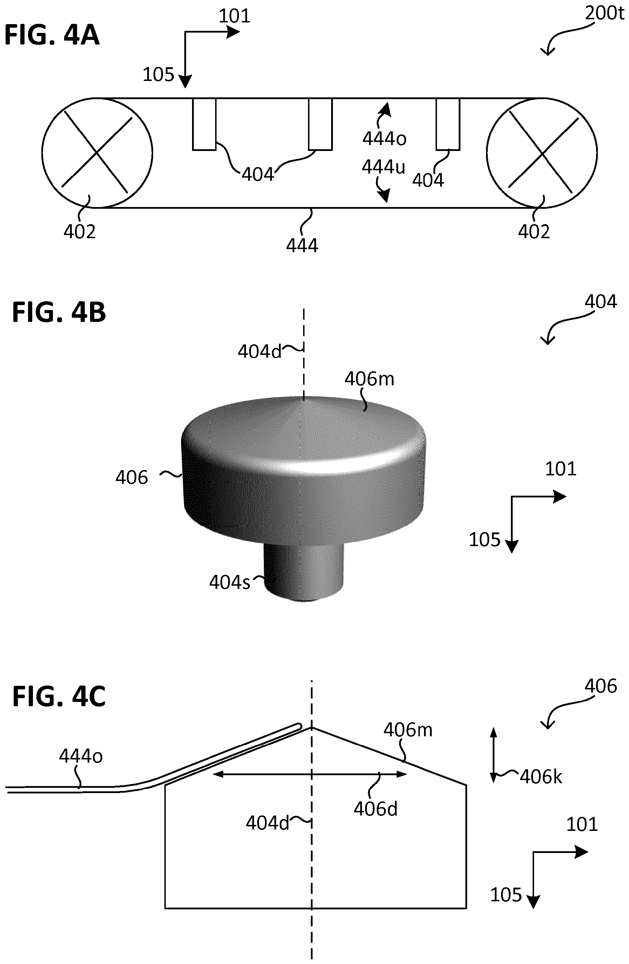

**Fig.4A** veranschaulicht eine Transportvorrichtung 200t gemäß verschiedenen Ausführungsformen in einer schematischen Seitenansicht oder Querschnittsansicht.

Die Transportvorrichtung 200t weist zwei drehbar gelagerte Spannrollen 402 (auch als Umlenkrollen bezeichnet) auf. Zwischen den Spannrollen 402 ist ein Transportband 444 (z.B. einen Gurt, ein Kettenband, oder Ähnliches; es ist anzumerken, dass auch mehrere Bänder, Gurte oder dergleichen zur Realisierung des Transportbandes 444 vorgesehen sein können, wobei die mehreren Bänder, Gurte oder dergleichen auf gemeinsamen Spannrollen gespannt sein können oder jeweils auf separate Spannrollen, die optional gemeinsam in gleicher Weise angesteuert werden können) gespannt. Das Transportband 444 (z.B. ein endlos-Transportband 444) kann einen Obertrum 444o und einen Untertrum 444u aufweisen. Der Obertrum 444o kann anschaulich den oberen zwischen den zwei Spannrollen 402 gespannten Abschnitt des Transportbands 444 bezeichnen und der Untertrum 444u kann den unteren zwischen den zwei Spannrollen 402 gespannten Abschnitt des Transportbands 444 bezeichnen. Ein Trum bezeichnet im Allgemeinen die freilaufenden Abschnitte eines Transportbands 444.

Im Betrieb der Transportvorrichtung 200t kann das Obertrum 444o oder ein darauf transportierter Behälter in eine Transportrichtung 101 transportiert werden.

Die Transportvorrichtung 200t weist ferner mehrere (z.B. mindestens zwei, drei, vier, fünf, sechs, sieben, acht, neun, zehn oder mehr als zehn) Abstützanordnungen 404 auf, auf welchen der Obertrum 444o aufliegen kann.

**Fig.4B** veranschaulicht eine Abstützanordnung 404 der Transportvorrichtung 200t gemäß verschiedenen Ausführungsformen in einer schematischen Perspektivansicht und **Fig.4C** eine Tragrolle 406 der Abstützanordnung 404 in einer Querschnittsansicht.

Die Tragrolle 406 (z.B. einen Rollenstummel) ist um eine Drehachse herum 404d drehbar gelagert und weist (nach oben hin, z.B. stirnseitig) eine Mantelfläche 406m (auch als Rotationsfläche 406m bezeichnet) auf, aufweisen, auf welcher das Obertrum 444o aufliegen kann.

Die Mantelfläche 406m pist schräg zu der Drehachse 404d. Anders ausgedrückt kann ein Pfad (z.B. eine Gerade oder Kurve), dessen Rotation um die Drehachse 404d die Mantelfläche 406m ergibt, schräg zu der Drehachse 404d sein. Ein Durchmesser 406d der Tragrolle 406 an der Mantelfläche 406m kann in eine vertikale Richtung (z.B. entgegen der Gravitationsrichtung 105) abnehmen.

Die Mantelfläche 406m und eine Ebene (vom Durchmesser 406d aufgespannt), welche quer zu der Drehachse 404d ist, schließen einen Winkel ein in einem Bereich von ungefähr 10° bis ungefähr 45°, z.B. in einem Bereich von ungefähr 10° bis ungefähr 30°.

Die Mantelfläche 406m kann einen kegelförmigen Abschnitt 406k der Tragrolle 406 begrenzen. Alternativ kann der Abschnitt 406k kegelstumpfförmig sein. Optional kann die Mantelfläche 406m zusätzlich eine, z.B. konvexe oder konkave, Krümmung in eine radiale Richtung aufweisen (d.h. in eine radiale Richtung von einer Kegelform abweichen).

Die Tragrolle 406 kann gemäß verschiedenen Ausführungsformen auf einem Sockel 404s (z.B. einer Stange, einem Stempel oder Ähnlichem) gelagert sein oder werden.

Gemäß verschiedenen Ausführungsformen kann die Tragrolle 406 in einem Spritzgussverfahren hergestellt sein oder werden, z.B. aus Kunststoff oder Metall (z.B. Aluminium). Dadurch kann die Herstellung der Tragrolle 406 kostengünstig sein, wodurch diese beispielsweise kostengünstig ersetzt werden kann, z.B. wenn diese beschädigt ist und/oder die Reinigungskosten die Herstellungskosten übersteigen.

Beispielsweise kann der Kunststoff einen Thermoplast, einen Duroplast und/oder ein Elastomer aufweisen oder daraus gebildet sein. Ein Thermoplast kann beispielsweise besonders kostengünstig verarbeitet werden. Ein Elastomer kann stoßartige Belastungen besser absorbieren und verkraften. Ein Duroplast kann resistenter gegen Erwärmung (z.B. Reibungswärme) und somit haltbarer sein.

Als Kunststoff kann beispielsweise ein Polymer oder Co-Polymer mit Makropolymerketten verstanden werden.

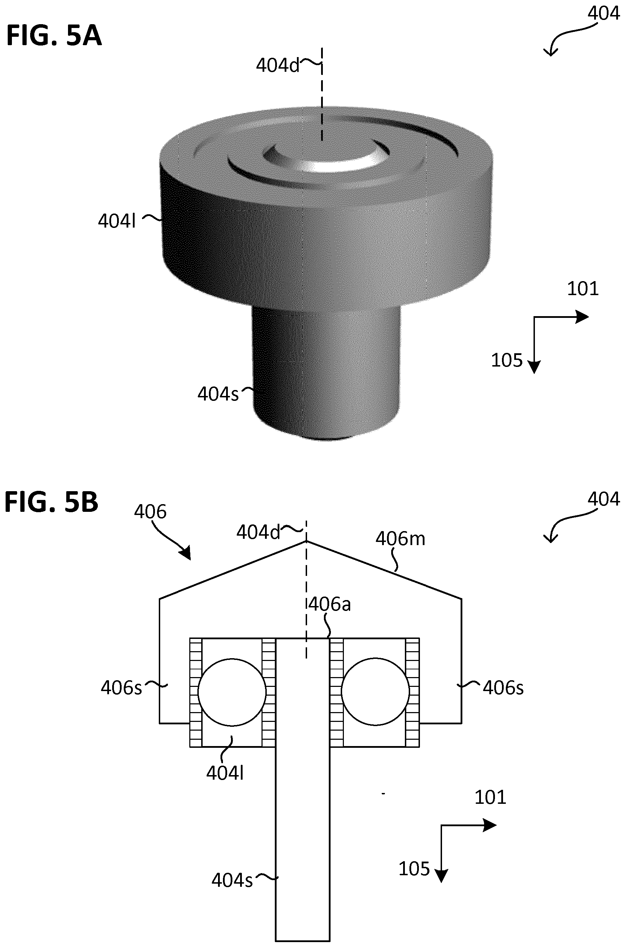

**Fig. 5A** veranschaulicht eine Abstützanordnung 404 gemäß verschiedenen Ausführungsformen in einer schematischen Perspektivansicht ohne Tragrolle.

Die Tragrolle 406 kann beispielsweise mittels eines Drehlagers 4041 auf dem Sockel 404s drehbar gelagert sein, welches die Drehachse 404d definiert. Das Drehlager 4041 kann beispielsweise auf den Sockel 404s aufgesteckt sein oder werden, was die (De)Montage vereinfacht.

**Fig.5B** eine Abstützanordnung 404 gemäß verschiedenen Ausführungsformen in einer schematischen Querschnittsansicht.

Die Tragrolle 406 kann eine umlaufende Seitenwand 406s aufweisen, welche sich von der Mantelfläche 406m in eine vertikale Richtung (z.B. in Gravitationsrichtung 105) erstreckt. Die Seitenwand 406s kann eine Aussparung in der Tragrolle 406 umgeben, in welcher das Drehlager 4041 (z.B. ein Kugellager) angeordnet, z.B. eingesteckt, ist. Damit kann die (De)Montage vereinfacht werden.

Beispielsweise können alle Teile der Abstützanordnung 404 zusammengesteckt sein oder werden, so dass diese einfach (de)montierbar sind.

Die Tragrolle 406 kann das Drehlager 4041 beispielsweise oben und zumindest teilweise seitlich abdecken, wobei dem Drehlager 4041 stirnseitig die Mantelfläche angeordnet sein kann. Beispielsweise kann die Tragrolle 406 einen Pilzkopf (z.B. mit abgerundeter Spitze) aufweisen oder daraus gebildet sein.

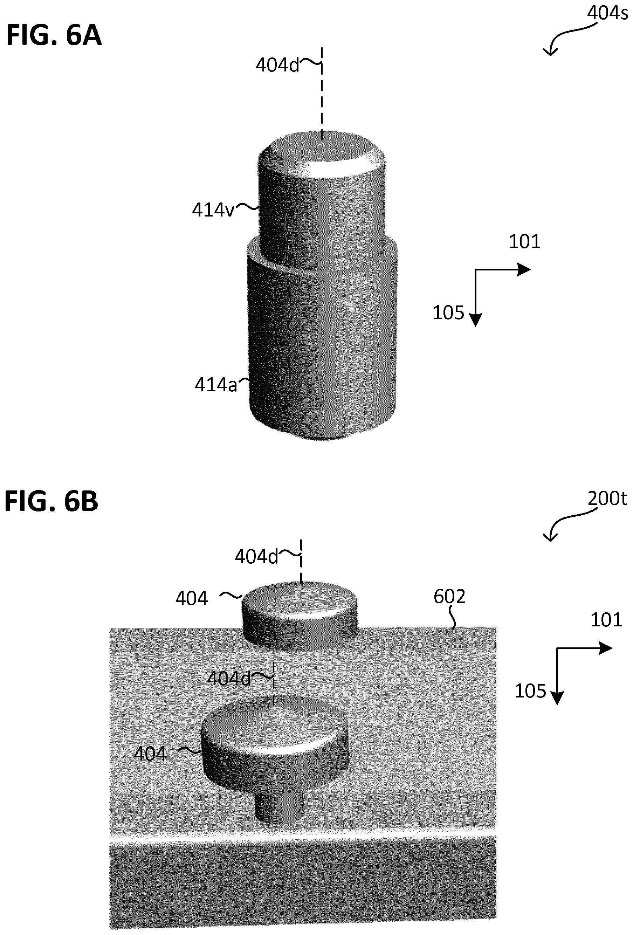

**Fig.6A** veranschaulicht einen Sockel 404s gemäß verschiedenen Ausführungsformen in einer schematischen Perspektivansicht ohne Drehlager.

Der Sockel 404s kann eine Verjüngung 414v aufweisen, auf welcher das Drehlager aufgesteckt ist und einen Abstandshalter 414a, auf welchem das Drehlager formschlüssig aufliegt, so dass dieses in einem Abstand von einem Träger gehalten wird, wie später noch genauer beschrieben wird.

**Fig.6B** veranschaulicht eine Transportvorrichtung 200t gemäß verschiedenen Ausführungsformen in einer schematischen Perspektivansicht.

Gemäß verschiedenen Ausführungsformen kann die Transportvorrichtung 200t einen Träger 602 (z.B. ein gekantetes Blech) aufweisen, welcher die mehreren Abstützanordnungen 404 trägt. Beispielsweise können diese in den Träger 602 eingesteckt und/oder eingeschraubt sein, was deren (De)Montage vereinfacht.

Die mehreren Abstützanordnungen 404 sind derart angeordnet und/oder ausgerichtet, z.B. mittels des Trägers 602 gehalten werden, dass deren Drehachse 404d im Wesentlichen parallel zur Vertikalen 105 und im Wesentlichen parallel zueinander sind.

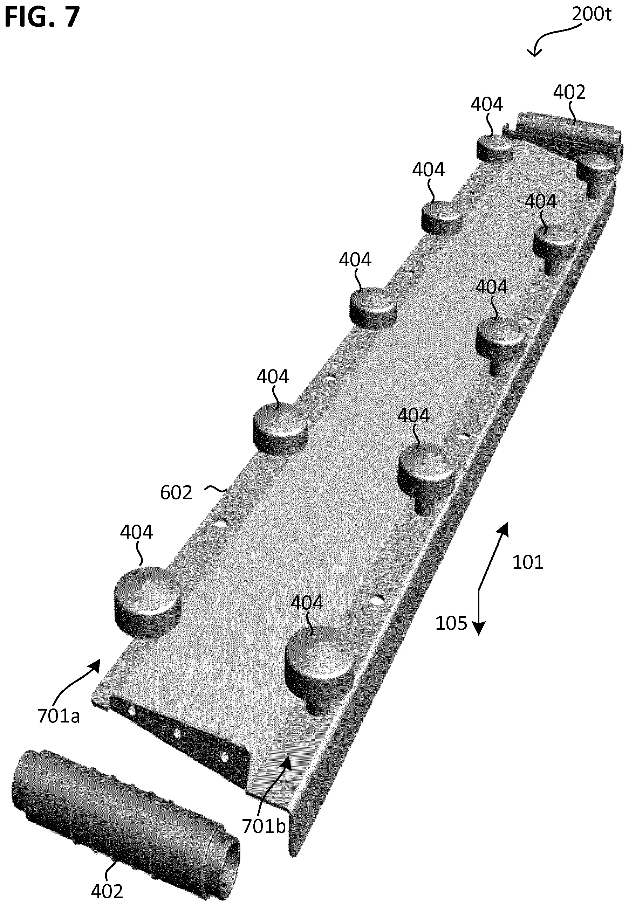

**Fig.7** veranschaulicht eine Transportvorrichtung 200t gemäß verschiedenen Ausführungsformen in einer schematischen Perspektivansicht ohne Transportband. Erfindungsgemäß weisen die mehreren Abstützanordnungen 404 eine erste Reihe 701a Abstützanordnungen (auch als erste Abstützreihe 701a bezeichnet) und eine zweite Reihe 701b Abstützanordnungen (auch als zweite Abstützreihe 701b bezeichnet) auf. Jede Abstützreihe 701a, 701b weist eine Mehrzahl von Abstützanordnungen 404 auf, deren Drehachsen 404d im Wesentlichen parallel zur Vertikalen 105 und im Wesentlichen parallel zueinander sind.

Die zwei Abstützreihen 701a, 701b können in einem Abstand voneinander angeordnet sein, welcher keiner ist als die Breite (Quererstreckung) des Transportbandes. Zwischen den zwei Abstützreihen 701a, 701b kann das Transportband hohl liegen.

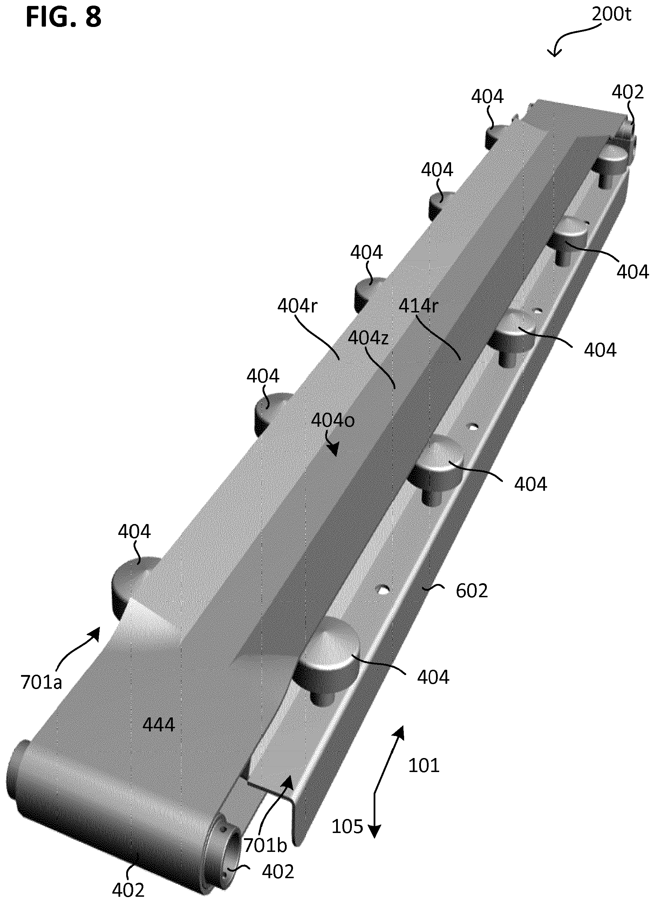

**Fig.8** veranschaulicht eine Transportvorrichtung 200t gemäß verschiedenen Ausführungsformen in einer schematischen Perspektivansicht mit Transportband 444.

Die erste Abstützreihe 701a kann einen ersten Randabschnitt 404r des Transportbandes 444 (des Obertrums 444o) abstützen und die zweite Abstützreihe 701b kann einen zweiten Randabschnitt 414r des Transportbandes 444 (des Obertrums 444o) abstützen.

Zwischen dem ersten Randabschnitt 404r und dem zweiten Randabschnitt 414r kann das Transportband 444 (mit seinem zentralen Abschnitt 404z) hohl liegen.

Optional kann aufgrund des Hohlliegens des Transportbands 444 eine Mulde gebildet sein, d.h. eine länglich vertiefte Transportfläche, welche von den zwei Randabschnitten 404r, 414r begrenzt wird.

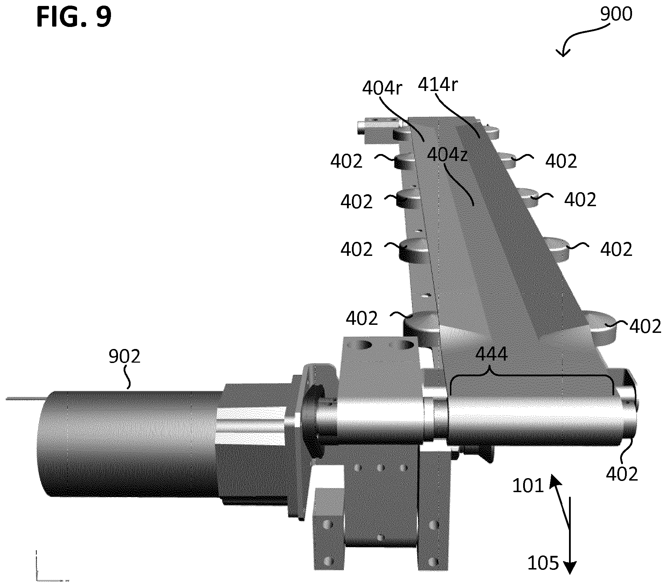

**Fig.9** veranschaulicht eine Transportvorrichtung 200t gemäß verschiedenen Ausführungsformen in einer schematischen Perspektivansicht.

Gemäß verschiedenen Ausführungsformen kann die Transportvorrichtung 200t einen Transportantrieb 902 (z.B. einen elektrischen Motor) aufweisen, welcher mit zumindest einer Spannrolle der zwei Spannrollen 402 (z.B. mittels eines Getriebes) gekuppelt ist zum Antreiben der Spannrolle.

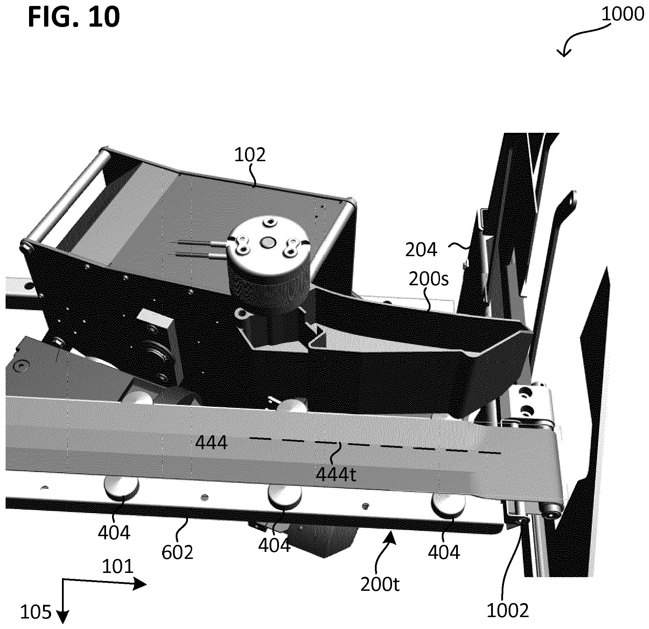

**Fig.10** veranschaulicht eine Kompaktoranordnung 1000 gemäß verschiedenen Ausführungsformen in einer schematischen Perspektivansicht.

Der Kompaktor 102 der Kompaktoranordnung 1000 kann neben der Transportvorrichtung 200t angeordnet, z.B. mittels eines Tragegestells 204 getragen, sein.

Die Transportvorrichtung 200t kann einen Transportpfad 444t definieren, welcher neben dem Kompaktor 102 angeordnet ist, z.B. in einem Abstand von dem Kompaktor 102. Entlang des Transportpfads 444t können mehrere Behälter, z.B. ein Strom an Behältern (auch als Behälterstrom bezeichnet), geführt werden, z.B. an dem Kompaktor 102 vorbei.

Die Kompaktoranordnung 1000 kann eine Selektiervorrichtung 200s aufweisen, welche zum Abteilen (Selektieren) von einigen Behältern aus dem Behälterstrom eingerichtet ist, z.B. basierend auf deren Kategorisierung und/oder basierend auf einer vorgegebenen Selektionsrate.

Gemäß verschiedenen Ausführungsformen kann die Transportvorrichtung 200t eine Aufsteckstruktur 1002 aufweisen, auf welche der Träger 602 aufgesteckt ist. Beispielsweise kann die Aufsteckstruktur 1002 an dem Tragegestell 204 abgestützt sein und der Träger 602 wiederum mittels der Aufsteckstruktur 1002. Die Aufsteckstruktur 1002 kann beispielsweise eine Stange aufweisen, auf welche der Träger 602 aufgesteckt werden kann. Dies ermöglicht es, den Träger 602 mitsamt den mehreren Abstützanordnungen 404 (d.h. als zusammenhängende Baugruppe) zu (de)montieren, indem dieser von der Aufsteckstruktur 1002 abgezogen wird (z.B. in eine Steckrichtung quer zur Transportrichtung 101).

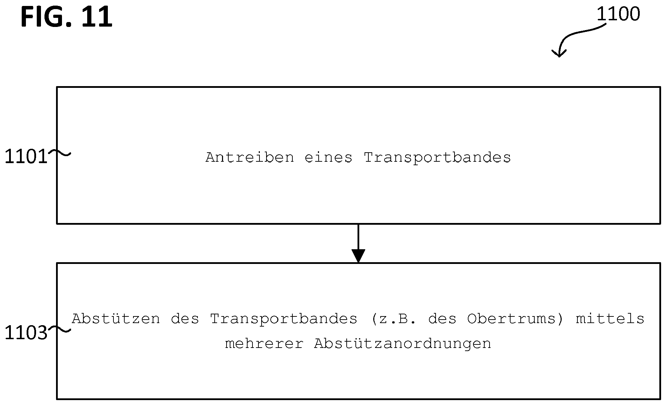

**Fig.11** veranschaulicht ein Verfahren 1100 gemäß verschiedenen Ausführungsformen in einem schematischen Ablaufdiagram.

Das Verfahren 1100 kann in 1101 aufweisen: Antreiben eines Transportbandes (z.B. mittels des Transportantriebs). Das Antreiben kann aufweisen, Antriebsenergie, z.B. ein Drehmoment, auf zumindest eine Spannrolle der zwei Spannrollen zu übertragen.

Das Verfahren 1100 kann ferner in 1103 aufweisen: Abstützen des Transportbandes (z.B. des Obertrums) mittels mehrerer Abstützanordnungen. Die Abstützanordnungen können eine (z.B. konische) drehbare Mantelfläche (z.B. einen Konus) bereitstellen, auf welchen das Transportband aufgelegt wird.

**Fig.12** veranschaulicht eine Kompaktoranordnung 1200 gemäß verschiedenen Ausführungsformen in einer schematischen Perspektivansicht.

Das Gehäuse 300g kann eine Wartungsöffnung 1202 aufweisen, welche optional mittels eines Deckels verschließbar ist. Die Wartungsöffnung 1202 kann die Transportvorrichtung 200t in Steckrichtung freilegen. Damit kann eine Demontage der Transportvorrichtung 200t, oder zumindest der mehreren Abstützanordnungen (z.B. als zusammenhängende Baugruppe), vereinfacht sein oder werden.

Das Gehäuse 300g der Kompaktoranordnung 1200 kann zwei einander gegenüberliegende Öffnung 1200o aufweisen, durch welche hindurch eine Transportstrecke (entlang des Transportpfads 444t) verläuft. Beispielsweise kann die Transportvorrichtung 200t entlang des Transportpfads 444t Behälter aufnehmen, z.B. von einer vorhergehenden Kompaktoranordnung, und/oder Behälter abgeben, z.B. an eine nachfolgende Kompaktoranordnung oder einen Sammelbereich.

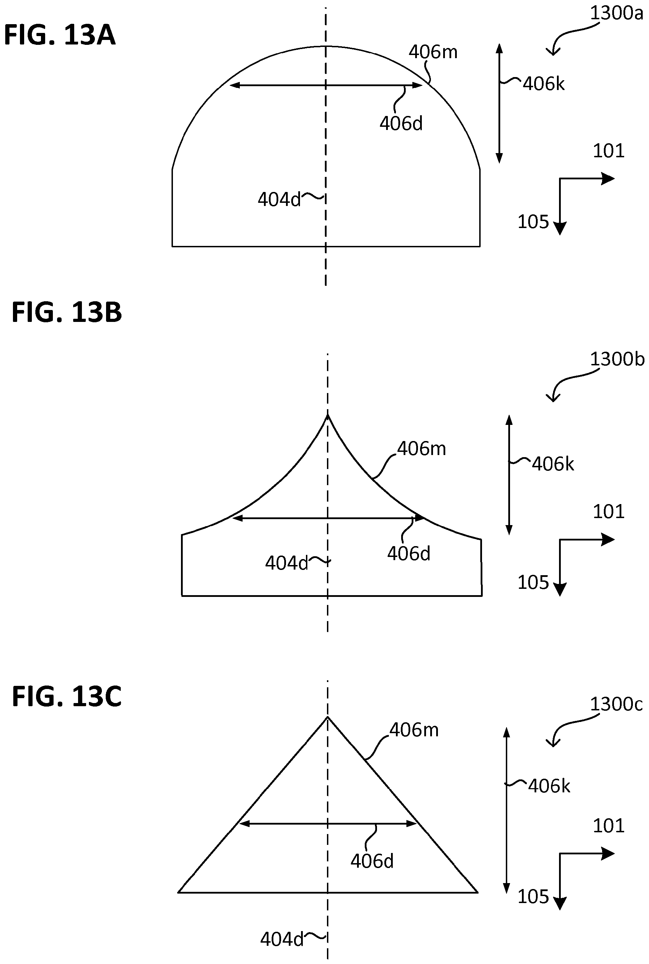

**Fig.13A**, **Fig.13B** und **Fig.13C** veranschaulichen jeweils eine Tragrolle 406 gemäß verschiedenen Ausführungsformen in verschiedenen Konfigurationen 1300a, 1300b, 1300c in einer Ansicht analog zu Fig.4C, welche alternativ oder zusätzlich zu der in Fig.4C gezeigten ersten Konfiguration verwendet werden können.

Die Mantelfläche 406m der Tragrolle 406 kann (z.B. stirnseitig) in einer zweiten Konfiguration 1300a eine konvexe Krümmung in radiale Richtung aufweisen (d.h. im entlang der Drehachse 404d verlaufenden Querschnitt konvex gekrümmt sein). Dadurch lässt sich anschaulich die Auflagefläche zwischen dem Transportband und der Tragrolle 406 verringern, was beide Bauteile aufgrund des geringeren Abriebs schont.

Die Mantelfläche 406m der Tragrolle 406 kann (z.B. stirnseitig) kann in einer dritten Konfiguration 1300b eine konkave Krümmung in radiale Richtung aufweisen (d.h. im entlang der Drehachse 404d verlaufenden Querschnitt konkav gekrümmt sein). Dadurch lässt sich anschaulich die maximale Krümmung des Transportbandes begrenzen, was das Transportband schont.

Die Tragrolle 406 kann in einer vierten Konfiguration 1300c kegelförmig sein. Dadurch lässt sich die Tragrolle 406 besonders kompakt ausbilden.

Gemäß verschiedenen Ausführungsformen kann die Transportvorrichtung 200t derart beweglich an dem Tragegestell 204 montiert sein oder werden, dass die Transportvorrichtung 200t quer zur Transportrichtung (anschaulich nach vorn aus der Kompaktoranordnung heraus bzw. zumindest von dem Kompaktor weg) bewegt werden kann. Dies kann beispielsweise eine Wartung, Reinigung, etc. der Transportvorrichtung 200t erleichtern, siehe beispielsweise Fig.12.

## Patentansprüche

1. Kompaktoranordnung (100, 1000, 1200) mit einem Kompaktor (102) und einer Transportvorrichtung (200t) zum Versorgen des Kompaktors (102) mit Leergut, wobei die Transportvorrichtung (200t) aufweist:
• zwei Spannrollen (402);
• ein Transportband (444), welches mittels der zwei Spannrollen (402) gespannt ist; **gekennzeichnet durch**
• mehrere in einer ersten Reihe (701a) und in einer zweiten Reihe (701b) angeordnete Abstützanordnungen (404) zum Abstützen des Transportbands (444), wobei jede der mehreren Abstützanordnungen eine Tragrolle (406) und ein Drehlager (4041) aufweist, wobei die Tragrolle (406) mittels des Drehlagers (4041) um eine Drehachse (404d) drehbar gelagert ist, und wobei die Tragrolle (406) eine Mantelfläche (406m), auf welcher das Transportband (444) aufliegt, aufweist, wobei die Mantelfläche (406m) mit einer Ebene quer zu der Drehachse (404d) einen Winkel in einem Bereich von 10° bis 45° einschließt,
wobei die Drehachsen (404d) der mehreren Abstützanordnungen (404) im Wesentlichen parallel zueinander sind, und
wobei die jeweilige Drehachse (404d) im Wesentlichen vertikal ist.

2. Kompaktoranordnung (100, 1000, 1200) gemäß Anspruch 1,
wobei die Tragrolle (406) einen Pilzkopf aufweist.

3. Kompaktoranordnung (100, 1000, 1200) gemäß Anspruch 1 oder 2,
wobei die Tragrolle (406) eine Aussparung (406a) aufweist, in welcher das Drehlager (4041) aufgenommen ist.

4. Kompaktoranordnung (100, 1000, 1200) gemäß einem der Ansprüche 1 bis 3,
wobei das Drehlager (4041) ein Wälzlager aufweist.

5. Kompaktoranordnung (100, 1000, 1200) gemäß einem der Ansprüche 1 bis 4,
wobei zumindest ein Abschnitt (406k) der Tragrolle (406) kegelförmig oder kegelstumpfförmig ist.

6. Kompaktoranordnung (100, 1000, 1200) gemäß einem der Ansprüche 1 bis 5,
wobei die Tragrolle (406) ein Spritzgussmaterial aufweist.

7. Kompaktoranordnung (100, 1000, 1200) gemäß einem der Ansprüche 1 bis 6,
wobei die Tragrolle (406) Kunststoff aufweist.

8. Kompaktoranordnung (100, 1000, 1200) gemäß einem der Ansprüche 1 bis 7,
wobei ein zentraler Abschnitt (404z) des Transportbands (444) zwischen den mehrere Abstützanordnungen (404) hindurch geführt wird.

9. Kompaktoranordnung (100, 1000, 1200) gemäß einem der Ansprüche 1 bis 8,
wobei die Abstützanordnungen der ersten Reihe (701a) in einem Abstand von den Abstützanordnungen der zweiten Reihe (701b) angeordnet sind, und
wobei der Abstand quer zu einer Transportrichtung (101) des Transportbands (444) ist.

10. Kompaktoranordnung (100, 1000, 1200) gemäß Anspruch 9,
wobei die Abstützanordnungen der ersten Reihe (701a) einen ersten Randabschnitt (404r) des Transportbandes (444) abstützen und die Abstützanordnungen der zweiten Reihe (701b) einen zweiten Randabschnitt (414r) des Transportbandes (444) abstützen, wobei der erste Randabschnitt (404r) und der zweite Randabschnitt (414r) einander gegenüberliegen.

11. Kompaktoranordnung (100, 1000, 1200) gemäß einem der Ansprüche 1 bis 10,
wobei die mehreren Abstützanordnungen (404) einen Transportpfad (444t) definieren, welcher neben dem Kompaktor (102) angeordnet ist.

12. Kompaktoranordnung (100, 1000, 1200) gemäß Anspruch 11, ferner aufweisend:
eine Selektiervorrichtung (200s), welche zum selektiven Auswählen von mittels der Transportvorrichtung (200t) transportierten Behältern und zum Zuführen der ausgewählten Behälter zu dem Kompaktor (102) eingerichtet ist.

13. Kompaktoranordnung (100, 1000, 1200) gemäß einem der Ansprüche 1 bis 12, die Transportvorrichtung (200t) ferner aufweisend:
einen Träger (602) zum Tragen der mehreren Abstützanordnungen (404); und
eine Aufsteckstruktur (100s), auf welche der Träger aufgesteckt ist.

14. Verfahren (1100) zum Versorgen eines Kompaktor (102) einer Kompaktoranordnung (100, 1000, 1200) mit Leergut, das Verfahren, aufweisend:
• Antreiben (1101) eines Transportbandes (444) einer Transportvorrichtung (200t) der Kompaktoranordnung (100, 1000, 1200); **gekennzeichnet durch** das
• Abstützen (1103) des Transportbandes (444) mittels mehrerer in einer ersten Reihe (701a) und in einer zweiten Reihe (701b) angeordneter Abstützanordnungen (404), wobei jede der mehreren Abstützanordnungen eine Tragrolle (406) und ein Drehlager (4041) aufweist, wobei die Tragrolle (406) mittels des Drehlagers (4041) um eine Drehachse (404d) drehbar gelagert ist, wobei die Tragrolle (406) eine Mantelfläche (406m), auf denen das Transportband (444) aufliegt, aufweist, wobei die Mantelfläche (406m) mit einer Ebene quer zu der Drehachse (404d) einen Winkel in einem Bereich von 10° bis 45° einschließt,
wobei die Drehachsen (404d) der mehreren Abstützanordnungen (404) im Wesentlichen parallel zueinander sind, und
wobei die jeweilige Drehachse (404d) im Wesentlichen vertikal ist.

## Claims

1. Compactor assembly (100, 1000, 1200) comprising a compactor (102) and a transport device (200t) for supplying the compactor (102) with empties, wherein the transport device (200t) comprises:
• two tensioning rollers (402);
• a transport belt (444) which is tensioned by means of the two tensioning rollers (402); **characterized by**
• a plurality of supporting arrangements (404) for supporting the transport belt (444) that are arranged in a first row (701a) and in a second row (701b), wherein each of the plurality of supporting arrangements comprises a carrying roller (406) and a rotary bearing (4041), wherein the carrying roller (406) is mounted so as to be rotatable about an axis of rotation (404d) by means of the rotary bearing (4041), and wherein the carrying roller (406) has an outer surface (406m) on which the transport belt (444) rests, wherein the outer surface (406m) encloses, with a plane transversely with respect to the axis of rotation (404d), an angle in a range from 10° to 45°,
wherein the axes (404d) of rotation of the plurality of support arrangements (404) are substantially parallel to one another, and
wherein the respective axis of rotation (404d) is substantially vertical.

2. Compactor assembly (100, 1000, 1200) according to Claim 1,
wherein the carrying roller (406) has a mushroom head.

3. Compactor assembly (100, 1000, 1200) according to Claim 1 or 2,
wherein the carrying roller (406) has a recess (406a) in which the rotary bearing (4041) is received.

4. Compactor assembly (100, 1000, 1200) according to one of Claims 1 to 3,
wherein the rotary bearing (4041) comprises a rolling bearing.

5. Compactor assembly (100, 1000, 1200) according to one of Claims 1 to 4,
wherein at least one portion (406k) of the carrying roller (406) is conical or frustoconical.

6. Compactor assembly (100, 1000, 1200) according to one of Claims 1 to 5,
wherein the carrying roller (406) contains an injection-moulded material.

7. Compactor assembly (100, 1000, 1200) according to one of Claims 1 to 6,
wherein the carrying roller (406) contains plastic.

8. Compactor assembly (100, 1000, 1200) according to one of Claims 1 to 7,
wherein a central portion (404z) of the transport belt (444) is guided through between the plurality of supporting arrangements (404).

9. Compactor assembly (100, 1000, 1200) according to one of Claims 1 to 8,
wherein the supporting arrangements of the first row (701a) are arranged at a distance from the supporting arrangements of the second row (701b), and
wherein the distance is transverse to a transport direction (101) of the transport belt (444).

10. Compactor assembly (100, 1000, 1200) according to Claim 9,
wherein the supporting arrangements of the first row (701a) support a first edge portion (404r) of the transport belt (444), and the supporting arrangements of the second row (701b) support a second edge portion (414r) of the transport belt (444), wherein the first edge portion (404r) and the second edge portion (414r) are situated opposite to one another.

11. Compactor assembly (100, 1000, 1200) according to one of Claims 1 to 10,
wherein the plurality of supporting arrangements (404) define a transport path (444t) which is arranged next to the compactor (102).

12. Compactor assembly (100, 1000, 1200) according to Claim 11, further comprising:
a selecting device (200s) which is designed for selectively selecting containers transported by means of the transport device (200t) and for feeding the selective containers to the compactor (102).

13. Compactor assembly (100, 1000, 1200) according to one of Claims 1 to 12, the transport device (200t) further comprising:
a carrier (602) for carrying the plurality of supporting arrangements (404); and
a plug-on structure (100s) onto which the carrier is plugged.

14. Method (1100) for supplying empties to a compactor (102) of a compactor assembly (100, 1000, 1200), the method comprising:
• driving (1101) a transport belt (444) of a transport device (200t) of the compactor assembly (100, 1000, 1200); **characterized by** the
• supporting (1103) of the transport belt (444) by means of a plurality of supporting arrangements (404) which are arranged in a first row (701a) and in a second row (701b), wherein each of the plurality of supporting arrangements comprises a carrying roller (406) and a rotary bearing (4041), wherein the carrying roller (406) is mounted so as to be rotatable about an axis of rotation (404d) by means of the rotary bearing (4041), wherein the carrying roller (406) has an outer surface (406m) on which the transport belt (444) rests, wherein the outer surface (460m) encloses, with a plane transversely with respect to the axis of rotation (404d), an angle in a range from 10° to 45°,
wherein the axes of rotation (404d) of the plurality of supporting arrangements (404) are substantially parallel to one another, and
wherein the respective axis of rotation (404d) is substantially vertical.

## Revendications

1. Agencement de compacteur (100, 1000, 1200), comprenant un compacteur (102) et un dispositif de transport (200t) pour l'alimentation du compacteur (102) en emballages vides, le dispositif de transport (200t) présentant :
- de rouleaux de serrage (402) ;
- une bande de transport (444) qui est serrée au moyen des deux rouleaux de serrage (402) ;
**caractérisé par**
- plusieurs agencements de support (404) disposés dans une première rangée (701a) et dans une deuxième rangée (701b) pour supporter la bande de transport (444), chacun parmi la pluralité d'agencements de support présentant un rouleau de support (406) et un palier pivotant (4041), le rouleau de support (406) étant supporté de manière rotative au moyen du palier pivotant (4041) autour d'un axe de rotation (404d), et le rouleau de support (406) présentant une surface d'enveloppe (406m) sur laquelle repose la bande de transport (444), la surface d'enveloppe (406m) formant avec un plan transversal à l'axe de rotation (404d) un angle dans une plage de 10° à 45°,
les axes de rotation (404d) de la pluralité d'agencements de support (404) étant essentiellement parallèles les uns aux autres, et
l'axe de rotation respectif (404d) étant essentiellement vertical.

2. Agencement de compacteur (100, 1000, 1200) selon la revendication 1,
dans lequel le rouleau de support (406) présente une tête en forme de champignon.

3. Agencement de compacteur (100, 1000, 1200) selon la revendication 1 ou 2,
dans lequel le rouleau de support (406) présente un évidement (406a) dans lequel est reçu le palier pivotant (4041).

4. Agencement de compacteur (100, 1000, 1200) selon l'une quelconque des revendications 1 à 3, dans lequel le palier pivotant (4041) présente un palier à roulement.

5. Agencement de compacteur (100, 1000, 1200) selon l'une quelconque des revendications 1 à 4, dans lequel au moins une portion (406k) du rouleau de support (406) est de forme conique ou tronconique.

6. Agencement de compacteur (100, 1000, 1200) selon l'une quelconque des revendications 1 à 5, dans lequel le rouleau de support (406) présente un matériau de moulage par injection.

7. Agencement de compacteur (100, 1000, 1200) selon l'une quelconque des revendications 1 à 6, dans lequel le rouleau de support (406) présente du plastique.

8. Agencement de compacteur (100, 1000, 1200) selon l'une quelconque des revendications 1 à 7, dans lequel une portion centrale (404z) de la bande de transport (444) est guidée entre la pluralité d'agencements de support (404).

9. Agencement de compacteur (100, 1000, 1200) selon l'une quelconque des revendications 1 à 8,
dans lequel les agencements de support de la première rangée (701a) sont disposés à distance des agencements de support de la deuxième rangée (701b), et
la distance est transversale à une direction de transport (101) de la bande de transport (444).

10. Agencement de compacteur (100, 1000, 1200) selon la revendication 9,
dans lequel les agencements de support de la première rangée (701a) supportent une première portion de bord (404r) de la bande de transport (444) et les agencements de support de la deuxième rangée (701b) supportent une deuxième portion de bord (414r) de la bande de transport (444), la première portion de bord (404r) et la deuxième portion de bord (414r) étant opposées l'une à l'autre.

11. Agencement de compacteur (100, 1000, 1200) selon l'une quelconque des revendications 1 à 10, dans lequel la pluralité d'agencements de support (404) définissent un chemin de transport (444t) qui est disposé à côté du compacteur (102).

12. Agencement de compacteur (100, 1000, 1200) selon la revendication 11, présentant en outre :
un dispositif de sélection (200s) qui est prévu pour choisir de manière sélective des récipients transportés au moyen du dispositif de transport (200t) et pour acheminer les récipients sélectionnés au compacteur (102) .

13. Agencement de compacteur (100, 1000, 1200) selon l'une quelconque des revendications 1 à 12, le dispositif de transport (200t) présentant en outre :
un support (602) pour supporter la pluralité d'agencements de support (404) ; et
une structure d'enfichage (100s) sur laquelle est enfiché le support.

14. Procédé (1100) pour alimenter un compacteur (102) d'un agencement de compacteur (100, 1000, 1200) en emballages vides, le procédé présentant :
- l'entraînement (1101) d'une bande de transport (444) d'un dispositif de transport (200t) de l'agencement de compacteur (100, 1000, 1200) ;
**caractérisé par**
- le support (1103) de la bande de transport (444) au moyen de plusieurs agencements de support (404) disposés dans une première rangée (701a) et dans une deuxième rangée (701b), chacun parmi la pluralité d'agencements de support présentant un rouleau de support (406) et un palier pivotant (4041), le rouleau de support (406) étant supporté de manière rotative au moyen du palier pivotant (4041) autour d'un axe de rotation (404d), le rouleau de support (406) présentant une surface d'enveloppe (406m) sur laquelle repose la bande de transport (444), la surface d'enveloppe (406m) formant avec un plan transversal à l'axe de rotation (404d) un angle dans une plage de 10° à 45°,
les axes de rotation (404d) de la pluralité d'agencements de support (404) étant essentiellement parallèles les uns aux autres, et
l'axe de rotation respectif (404d) étant essentiellement vertical.
